# EUROPEAN PATENT APPLICATION

(11) **EP 4 783 647 A1**
(43) Date of publication of application: **29.07.2026**
(21) Application number: 25188540.6
(22) Date of filing: 09.07.2025
(51) Int. Cl.: H04W 24/02, H04W 72/12, H04W 72/52

(54) **A METHOD OF SCHEDULING DATA TRANSMISSION IN A RADIO ACCESS NETWORK, A CONTROLLER AND A COMPUTER PROGRAM**

(30) Priority: 10.07.2024 GB 202410009
(71) Applicant: Vodafone Group Services Limited, Newbury RG14 2FN (GB)
(72) Inventor: SAMUEL, Issac, London, W2 6BY (GB)
(74) Representative: Boult Wade Tennant LLP

(57) **Abstract**

A method of scheduling data transmission in a radio access network is provided. The radio access network comprises a scheduler configured to orchestrate communication of data between one or more base stations and a plurality of User Equipments, UEs, according to a set of instructions. The method comprises receiving real-time network usage data. The method further comprises dynamically modifying the set of instructions based on the network usage data. The method further comprises implementing the modified set of instructions so that the scheduler is configured to orchestrate communication of data between the one or more base stations and the plurality of UEs according to the modified set of instructions.

## Description

### Field of the invention

The present invention relates to scheduling in a radio access network. In particular, the invention relates to modification of L1 scheduling based on network usage data and/or conditions.

### Glossary

RAN - Radio Access Network
MNO - Mobile Network Operator
GPU - Graphics Processing Unit
O-RAN - Open RAN Alliance
O-DU - Open Distributed Unit
O-CU - Open Central Unit
O-RU - Open Radio Unit
PHY - Physical Layer (L1)
MAC - Medium Access Control (L2)
RLC - Radio Link Control (L2)
PDCP - Packet Data Convergence Protocol (L3)
RRC - Radio Resource Control (L3)
SDAP - Service Data Adaptation Protocol
OS - Operating System
API - Application Programming Interface
SMO - Service Management and Orchestration
DMS - Deployment Management Services
NF - Network Function
IMS - Infrastructure Management Services
QoS - Quality of Service
PDCCH - Physical Downlink Control Channel
DCI - Downlink Control Information
PDSCH - Physical Data Shared Channel
ARQ - Automatic Repeat reQuest
HARQ - Hybrid ARQ
PUSCH - Physical Uplink Shared Channel
SLIV - Start and Length Indicator Value
ARP - Allocation and Retention Priority
RQA - Reflective QoS Attribute
Near-RT RIC - Non-Real-Time RAN Intelligent Controller
Non-RT RIC - Near-Real-Time RAN Intelligent Controller
ISAC - Integrated Sensing and Communication
RF - Radio Frequency
RIS - Reconfigurable Intelligent Surface
CUDA - Compute Unified Device Architecture
AI - Artificial Intelligence
ML - Machine Learning
CPU - Central Processing Unit
CU - Centralized Unit
DU - Distributed Unit
MNO - Mobile Network Operator
RRH - Remote Radio Head
APU - Antenna Processing Unit
CF-mMIMO - Cell-Free massive Multiple-Input Multiple-Output
RIC - Radio Interface Controller or RAN Intelligent Controller
SI - Scheduler Instructions
CaaS - Containers as a Service
SW - Software
HW - Hardware
COTS - Commercial-Off-The-Shelf
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Scheduling in a Radio Access Network is the process of allocating radio resources for transmitting data. In most prior art use cases, scheduling is dictated by the network. UEs connected via the network must adhere to the schedule set by the network. Developments in radio access network technology have introduced methods for feeding data back to the network that could be used to improve scheduling.

Open RAN is a technology architecture concept directed to decoupling the hardware and software components of a Radio Access Network (RAN). It is a RAN that includes open interoperable interfaces and virtualization. In prior art (Non-Open) RANs, the hardware and software components are typically proprietary. Non-Open RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

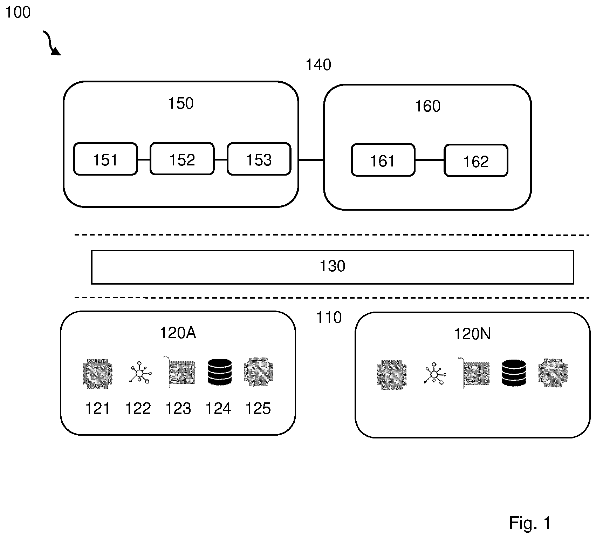

Fig. 1 illustrates some of the elements of an example Open RAN system 100, which is implemented as a cloud computing platform (O-Cloud). The system 100 may be described with reference to different hardware and software layers of the platform.

At the O-Cloud Node layer 110, the system comprises one or more physical infrastructure nodes 120A, 120N that meet O-RAN requirements. Each physical infrastructure node 120A comprises computing 121, networking 122, GPU 123, and storage 124 components, alongside acceleration technologies 125 for RAN operations (such as forward error correction and other computationally intensive operations that are offloaded to dedicated hardware). Each physical infrastructure node 120A, 120N is configured to host the relevant O-RAN network functions 150, 160, which are implemented at the Open RAN application layer 140. The network functions 150, 160 implemented at the Open RAN application layer 140 may include O-CU 160, O-DU 150, and O-RU.

The O-CU, O-DU and O-RU network function deployments comprise functional elements for processing different protocols in the RAN protocol stack. The O-DU 150 comprises:
- a High-PHY component 151 to perform the scrambling, modulation, layer mapping, precoding, resource element mapping, and I/Q compression elements of the PHY layer;
- a MAC component 152; and
- a RLC component 153.

The O-CU comprises:
- a PDCP component 161; and
- a RRC/SDAP component 162.

The O-DU 150 may further comprise an Open RAN fronthaul interface to connect the O-DU to one or multiple O-RUs.

At the O-Cloud hypervisor or containers / OS layer 130, there exists a collection of cloud functions to enable the Open RAN applications 150, 160 to run on the one or more O-Cloud hardware nodes 120A. The cloud functions may comprise supporting software components, such as an operating system, Containers (stand-alone executable software packages), a Container Orchestration Platforms (such as Kubernetes), a container runtime, and the like. The cloud functions may also include the corresponding management and orchestration functions.

The O-Cloud serves as a fundamental component for facilitating cloud computing capabilities within the context of RAN network functions. It comprises both hardware and software elements. In particular, its software exposes open APIs, fostering interoperability and flexibility across various vendor solutions. With a decoupled architecture, the O-Cloud allows for sourcing hardware from different vendors, promoting neutrality and flexibility in hardware selection. It supports Service Management and Orchestration (SMO), enabling homing decisions and selecting Deployment Management Services (DMS) for Network Function (NF) Deployments. The DMS handles workload placement, lifecycle management, and resource allocation within O-Cloud Node Clusters, while Infrastructure Management Services (IMS) ensure the infrastructure's availability, reliability, and performance. Moreover, the O-Cloud offers automation capabilities, enhancing efficiency and reducing manual intervention, ultimately supporting efficient resource utilization and scalability for RAN network functions in a cloud-native environment.

Layer 1 (L1) scheduling in the hardware platform of the Open RAN system is usually completely static and fixed. In standard scheduling, a fixed frame slot is provided during which queued tasks must be completed. Any tasks not completed must be discarded or deferred until the next available frame slot.

The existing approach causes scheduling tasks to be completely bound within the execution parameters of the frame slot, without considering the resources available and the performance ability of the platform. This provides a limited response of performance which cannot adapt to the fast-changing needs of the environment. In some cases, this can cause a breakdown of operation by a system crash or can limit the performance of the system by under-utilizing the available resources. This can also restrict on-demand services for ULLRC applications, such as gaming, facial recognition (e.g., at airports), surgical procedures, and the like. Services may be restricted for a limited period of time, especially for 6G speeds and latency requirements.

Moreover, the static and fixed L1 scheduling parameters are currently set manually by engineers to ensure that tasks fit within the frame slot and do not cause buffer overflow or other issues. There are currently no available methods for determining parameters to tailor the schedule to the particular chipsets, environment and traffic patterns. The current L1 scheduling prior art only provides a static L1 schedule that is akin to a black box.

### Summary

A method of data transmission in a radio access network is provided. The radio access network comprises a scheduler configured to orchestrate communication of data between one or more base stations and a plurality of User Equipments, UEs, according to a set of instructions. The method comprises receiving real-time network usage data and/or network status data. The method further comprises dynamically modifying the set of instructions based on the network usage data. The method further comprises implementing the modified set of instructions so that the scheduler is configured to orchestrate communication of data between the one or more base stations and the plurality of UEs according to the modified set of instructions, wherein the set of instructions comprises one or more parameters related to constraints on target hardware.

The problem described above is addressed by providing a constantly updated schedule, which is updated on a near-real-time basis. The parameters of the schedule can be made available at a fixed location and the continual changes to the parameters will enable the schedule to be dynamic. The changes of the environment such as traffic density, direction of mobility, speed of congregation will cause a dynamic change in scheduling to adapt to the changing environment. Wherein target hardware is hardware used in the communication of data between one or more base stations and a plurality of User Equipments, UEs.

The scheduler may be configured to allocate physical layer (L1) resources.

The scheduler may be configured to coordinate data transmission on both downlink and uplink.

The scheduler may be provided in the MAC layer (L2).

The method of data transmission may be a method of scheduling data transmission or a method of controlling data transmission.

Prior art methods involve scheduling resources based on channel quality measurements between each UE and the base station, as well as data buffer status (downstream and upstream) for each UE, QoS requirements for each UE, and the like. However, the fundamental scheduling parameters (which are applied to all UEs) are typically static and fixed. These parameters are not adjusted in response to the changing needs of the network or changing radio conditions.

In contrast, the proposed methods provide the ability for the network to modify the schedule dynamically (during runtime). The modification of the schedule may be based on a number of factors, including changes in the environment, utilisation of radio resources, radio conditions, and the like.

L1 components are some of the most power-intensive of the radio access network. Therefore, improving L1 scheduling may significantly improve the efficiency of the RAN.

In 5G, Pre-6G, 6G and beyond, there is (or is predicted to be) an increased demand for large quantities of processing and radio resources to be made available (with low latency) for short periods of time. Current scheduling methods provide a static amount of resources all the time. The proposed methods are able to quickly respond to requests for increased capacity and therefore better serve the changing needs of subscribers.

In some examples, the scheduler may switch between a static scheduling method (as per the prior art) and dynamic scheduling (as per the proposed methods).

The network usage data may comprise data indicative of the status of one or more radio channels, such as radio channel condition (noise, interference, attenuation etc.).

The network usage data may comprise network demand information, such as number of subscribers, traffic density, and the like.

The network usage data may also comprise forecast data indicative of future demand on the network. For example, a forecast of demand may be based on a number of people identified in a particular area (or heading towards a particular area) by surveillance cameras.

The data communicated between one or more base stations and the plurality of UEs may be user data (i.e., application data).

Where this disclosure refers to "real-time" network usage data, this may be low latency data that can be immediately acted on in a closed loop feedback system.

Modifying the set of instructions may comprise defining a period of time during which the modified set of instructions is implemented by the scheduler.

The method may further comprise reverting to a previous schedule (i.e., before the modification) after the period of time has elapsed.

Modifying the set of instructions may further comprise defining a window of time, wherein the period of time during which the modified set of instructions is implemented by the scheduler is a portion of the window of time.

Defining a window of time may comprise setting a start flag and a stop flag. Alternatively, defining a window of time may comprise setting a start flag and a number of frame stots.

The window of time may be defined by an xApp on the Near-RT RIC, which may determine the required window of the timing based on the network usage data. For example, if the default schedule is designed for 5 people passing through a given area (e.g., passport security) every 20 seconds, sensing that there are 20 people in the given area might be addressed by increasing the capacity by a factor of 4 for a period of 20 seconds. If more people are subsequently detected (e.g., because a flight has just arrived), the xApps on the RIC may determine that more capacity is required and increase the capacity by a factor of 5 or 6 for a longer period (e.g., 5 minutes).

When setting the window for the modified instructions, the controller (e.g., RIC) may check for conflict to ensure that the modified schedule does not result in apps conflicting over time stots.

The method may further comprise preparing for implementation of the modified set of instructions during an initial period after the start flag and before the period of time during which the modified set of instructions is implemented by the scheduler.

The initial period may be used for fine tuning the default operating schedule until the new schedule is implementer. For example, to arrange for slots to be free that will be used by the modified schedule.

Likewise, during a final period after the period of time has elapsed and before the stop flag, the scheduler may prepare to implement the next schedule (e.g., the original default schedule or a new modified schedule).

During the initial period and/or when the modified schedule of instructions is in force, tasks for other UEs (that do not require enhanced capacity) may be compressed to fill smaller timeslots. This may free up frame slots for tasks for the UEs that are requiring enhanced capacity.

During the initial period and/or when the modified schedule of instructions is in force tasks may follow a different sequence of timings to meet the demands of the network, based on the network usage data.

The set of instructions may comprise one or more parameters (e.g. a plurality of parameters) including one or more of:
subcarrier offset;
subcarrier spacing;
symbol duration;
slot format;
a time domain allocation for downlink data transmission, k0;
Ack/Nack timing information, k1;
a time domain allocation for uplink data transmission, k2;
a Start and Length Indicator Value, SLIV;
a minimum time duration required from decoding a Physical Downlink Control Channel, PDCCH, to reception of a Physical Data Shared Channel, PDSCH, N1;
a minimum time duration required from decoding a Physical Downlink Control Channel, PDCCH, to transmission of a Physical Uplink Shared Channel, PUSCH, N2;
a wait time;
a response time;
a turnaround time;
a buffer size;
a chunking size;
a 5G Quality of Service, QoS, Identifier;
an Allocation and Retention Priority, ARP;
a Reflective QoS Attribute, RQA;
one or more scheduling weights;
one or more admission thresholds; and
one or more queue management thresholds.

Downlink Control Information (DCI) may be carried via the Physical Downlink Control Channel (PDCCH).

Downlink Data may be transmitted via a Physical Data Shared Channel (PDSCH). Uplink Data may be transmitted via a Physical Uplink Shared Channel (PUSCH).

The time domain allocation for downlink data transmission (k0) may be a number of time slots between PDCCH/DCI and PDSCH.

The Ack/Nack timing information (k1) may be a number of time slots between PDSCH and HARQ Ack/Nack transmission.

The time domain allocation for uplink data transmission (k0) may be a number of time slots between PDCCH/DCI and Uplink Data transmission.

The Start and Length Indicator Value (SLIV) may comprise a start symbol and length of symbol scheduled in a specific slot for PDSCH and/or PUSCH.

The one or more parameters related to constraints on the target hardware may include:
5G constraints;
subcarrier offset;
subcarrier spacing;
symbol duration;
slot format;
a time domain allocation for downlink data transmission, k0;
Ack/Nack timing information, k1;
a time domain allocation for uplink data transmission, k2;
a Start and Length Indicator Value, SLIV;
a minimum time duration required from decoding a Physical Downlink Control Channel, PDCCH, to reception of a Physical Data Shared Channel, PDSCH, N1;
a minimum time duration required from decoding a Physical Downlink Control Channel, PDCCH, to transmission of a Physical Uplink Shared Channel, PUSCH, N2;
a buffer size; and
a chunking size.

The method may further comprise storing the updated set of instructions in a persistent storage location of the scheduler.

The persistent storage location may be a file stored on the scheduler at a fixed file location.

The RAN may be an Open RAN comprising one or more network function deployments.

The one or more network function deployments may comprise an Open Distributed Unit, O-DU.

The O-DU may comprise the scheduler.

The Open RAN may further comprise a controller configured to perform the steps of receiving the real-time network usage data and dynamically modifying the set of instructions based on the network usage data.

The controller may be a Near-Real-Time RAN Intelligent Controller, Near-RT RIC.

A RAN Intelligent Controller (RIC) may be a software-defined component of the Open Radio Access Network (Open RAN) responsible for controlling and tuning RAN functions.

The RIC may facilitate third-party applications for automating and tuning RAN operations.

The RIC may be configured to implement personalized services, network slicing, traffic steering, beamforming, and indoor location tracking capabilities.

The RIC may comprise a Near-Real-Time RIC (Near-RT RIC) and a Non-Real-Time RIC (Non-RT RIC).

The Non-RT RIC may be an element of the SMO framework. The Non-RT RIC may host one or more applications called rApps. In some examples, the Non-RT RIC may be used to implement control of RAN elements and their resources with a reaction time of 1 second or greater.

The Non-RT RIC may use network data, performance metrics, and subscriber data as inputs to an Al model. The Non-RT RIC may implement network tuning and policy guidance based on the Al model.

The Near-RT RIC may reside within a telco edge cloud or regional cloud. The Near-RT RIC may be responsible for intelligent edge control of RAN nodes and resources The Near-RT RIC may host one or more applications called xApps. The Near-RT RIC may provide policy feedback to the Non-RT RIC. In some examples, the Near-RT RIC may be used to implement control of RAN elements and their resources with a reaction time of 1 second or less. Preferably, the Near-RT RIC may be used to implement control of RAN elements and their resources with a reaction time of around 10 milliseconds.

The network usage data may be indicative of changes in the environment including one or more of:
a number of subscribers,
a traffic density,
a direction of subscriber mobility,
a maximum subscriber mobility,
a minimum subscriber mobility,
a speed of congregation,
a measurement of interference,
a signal strength,
a downlink latency
an uplink latency, and
a power saving mode.

In this document, "traffic" may refer to data exchanged via the access network. "Traffic density" may refer to a data rate of the network traffic.

A direction of user mobility may comprise geographic movements of individual UEs and/or overall geographic movement of groups of UEs.

A speed of congregation may comprise a geographical divergence (or convergence) of subscribers.

The method of any preceding claim, wherein the network usage data comprises data from an Integrated Sensing and Communication, ISAC, platform.

The ISAC platform may comprise a plurality of environmental sensors. The ISAC platform may be configured to facilitate communication via one or more of: beamforming with MIMO arrays; Al model creation and training; and modulation scheme adaptation.

The proposed methods may enable the network to react quickly to the changing needs of its subscribers. Examples include smart factories, health monitoring, smart traffic monitoring, intruder detection, privacy protection and/or object targeting.

The sensing and communication aspects of the ISAC platform may each comprise common elements, such as:
beamforming; and
phased antenna arrays.

The ISAC platform may further comprise channel estimation, symbol detection and object detection functionality, wherein these functions are provided by common hardware.

The ISAC platform may comprise sensors for monitoring the wireless network and also comprise sensors for other inputs to measure related parameters that indirectly affect the network (such as video cameras, which may be used to identify and count people).

The network usage data may be indicative of changes in radio frequency, RF, coverage. The method may further comprise adjusting one or more Reconfigurable Intelligent Surfaces, RISes, to improve coverage, based on the network usage data.

The one or more Reconfigurable Intelligent Surfaces may comprise a planar surface composed of unit-cells. Properties of the unit-cells may be controlled dynamically to tune incident wireless signals through reflection, refraction, focusing, collimation, modulation and/or absorption.

RIS may be suitable for indoor and outdoor use. RIS may be used indoors in offices, airports, and shopping centres. RIS may be used outdoors in street furniture, such as lamp posts and billboards.

The one or more RISes may be used to automatically sense movement of UEs and dynamically update coverage (e.g., by determining which cells need to change to enhance coverage).

Advantageously use of RISes may improve network coverage and reduce energy consumption.

Adjusting the one or more RISes may be further based on one or more RF coverage models.

An RF model reconfiguration AI engine may be used to control the one or more RISes based on the one or more RF coverage models and the network usage data.

Data and instructions for controlling the one or more RISes may be provided by the SMO. Additionally or alternatively, data and instructions for controlling the one or more RISes may be provided by a network controller (e.g., the RIC, such as from xApps running on the Near-Real-Time RIC or rApps running on the Non-Real-Time RIC).

The network usage data may comprise schedule data indicative of planned or forecasted changes in demand for data capacity (e.g., operator or customer data). In one example,

The network usage data may comprise a request for temporary increased data capacity (e.g., gaming, drone filming, medical instruments).

The one or more base stations may be associated with a single cell and the plurality of UEs may be connected to the single cell.

The one or more base stations may be associated with a plurality of different cells and the plurality of UEs may be each connected to a cell selected from the plurality of different cells.

In the MULTICELL scenario, L1 scheduling may be implemented by CUDA-Accelerated RAN, such as that offered by NVIDIA (RTM).

Dynamically modifying the set of instructions based on the network usage data may comprise modifying the set of instructions based on a model of one or more physical hardware elements on which the scheduler is implemented.

The physical hardware elements may be one or more physical infrastructure nodes in a cloud platform.

The physical hardware elements may comprise a chipset architecture.

A controller configured to perform any of the methods described above is also provided.

A computer program comprising instructions that, when executed on a processor, cause the processor to perform any of the methods described above is also provided.

A method of scheduling data transmission in a radio access network is also provided. The radio access network comprises a scheduler configured to orchestrate communication of data between one or more base stations and a plurality of User Equipments, UEs, according to a set of instructions. The method comprises simulating the set of instructions using a model of one or more physical hardware elements on which the scheduler is implemented and network usage conditions; and The method further comprises obtaining one or more predicted performance metrics. The method further comprises modifying the set of instructions based on the one or more predicted performance metrics. The method further comprises implementing the modified set of instructions so that the scheduler is configured to orchestrate communication of data between the one or more base stations and the plurality of UEs according to the modified set of instructions.

In contrast to the prior art methods, in which engineers curate the L1 scheduling parameters manually, the proposed methods involve automatically determining L1 scheduling parameters by training models for chipsets that dynamically use the specific environment and traffic pattern buildup to create a specific L1 schedule based on short and long-term requirements. The current L1 scheduling prior art only provides a static L1 schedule that is akin to a black box and cannot be trained externally by Al/ML for deployment. In contrast, the proposed methods make use of Al and ML algorithms to provide an improved L1 schedule based on the particular chipsets, environment and traffic patterns. AI and ML algorithms may be trained based on a data set, including network usage data. The data set may be created using raw real-world data, curated real-world data, synthetic data, or some combination of these options. The data may be created using simulations of a telecommunications network. The output of the Al and ML algorithms may include a set of instructions comprising one or more parameters related to constraints on the target hardware. Alternatively, the output of the AL and ML algorithms may comprise values for one or more parameters related to constraints on target hardware. The one or more parameters may then be included in a set of instructions. Thus, the AL and ML algorithms may be used to create a set of instructions based on data including network usage conditions. Performance of the Al and ML algorithms may be evaluated by simulating the set of instructions created using the algorithm and using a model of one or more physical hardware elements on which the scheduler is implemented and network usage conditions matching the corresponding network usage data. The model may be refined based on the evaluation of the performance. The Al and ML algorithms may be hosted on the service management orchestrator platform (SMO). The Al and ML algorithms may comprise one or more of the following types of models/algorithms:
deep inference;
logistic regression,
neural network,
recurrent neural network (RNN),
long short-term memory (LSTM),
convolutional neural network (CNN),
k-means,
support vector machine,
k-nearest neighbours,
random forest,
decision tree, and
XGBoost (eXtreme Gradient Boosting)

The problem is addressed by using model of the hardware (a Digital Twin) to allow the RIC or the SMO to generate a dynamic trained schedule based on network usage conditions, such as inputs from traffic Performance, and long term traffic patterns (e.g., weekdays, month ends, bank and public holidays), to create schedules that are trained over a period of time for the specific locations (e.g., shopping malls, airports, industries, schools, universities, highways, stadiums etc.).

The Digital Twin can also make use of schedule data, (e.g., airport flight schedules, football game schedules, and the like) to refine multiple different sets of instructions and generate a dynamic performance pattern that serves the need of the network.

When a flight arrives, there may be a need to perform facial recognition on the passengers (e.g., at passport control). This may require large quantities of data to be communication via the access network and therefore may require a temporary increase in capacity for the UEs performing the facial recognition.

The Digital Twin may send the updated schedule (comprising one or more sets of instructions) to the L1 scheduling framework and the new set of instructions may be implemented during a flagged period (e.g., defined with a start time and end time).

The Digital Twin may be continually updated based on feedback from the network. The RIC/SMO may use the updated model to continually refine the one or more sets of instructions and replace the instructions that are sent to the scheduler. Therefore, the L1 scheduling parameters may be updated to provide improved power vs. performance trade-off for improved subscriber satisfaction, based on network usage.

The scheduler may be configured to allocate physical layer (L1) resources.

The scheduler may be configured to coordinate data transmission on both downlink and uplink.

The scheduler may be provided in the MAC layer (L2).

Prior art methods involve scheduling resources based on channel quality measurements between each UE and the base station, as well as data buffer status (downstream and upstream) for each UE, QoS requirements for each UE, and the like. However, the fundamental scheduling parameters (which are applied to all UEs) are typically static and fixed.

In contrast, the proposed methods provide the ability for the network to modify the schedule based on the particular environment by simulating the schedule using a model of the hardware and environment.

The network usage conditions may comprise the status of one or more radio channels, such as radio channel condition (noise, interference, attenuation etc.)

The network usage conditions may comprise network demand information, such as number of subscribers, traffic density, and the like.

The data communicated between one or more base stations and the plurality of UEs may be user data (i.e., application data).

The model may be an Al model. The model may be trained using training data.

Simulating the set of instructions using the model may comprise simulating a plurality of different candidate sets of instructions using the model, obtaining one or more respective performance metrics for each candidate and selecting a modified set of instructions from the plurality of candidates based on the performance metrics.

Simulating the set of instructions using the model may comprise estimating a time taken for each of a plurality of instructions to be carried out by the one or more physical hardware elements.

A description of the physical hardware may be copied to model. The model may be used to simulate the time taken to execute particular instructions. For example, the model may be used to simulate how long it takes to move data from memory.

Actual hardware measurements may be taken and used to train the model.

The one or more physical hardware elements may comprise one or more of:
a chipset;
a CPU;
a GPU;
computer memory;
data storage;
networking elements; and
acceleration elements.

The physical hardware elements may be one or more physical infrastructure nodes in a cloud platform.

The network usage conditions comprise environmental conditions including one or more of:
a number of subscribers,
a traffic density,
a direction of user mobility,
a speed of congregation,
a measurement of interference, and
a signal strength.

The method may further comprise training the model using network usage data and/or physical hardware performance data (e.g., data indicating a time taken for each of a plurality of instructions to be carried out by the one or more physical hardware elements).

The network usage data may comprise one or more of:
network data received from a network function, controller and/or
   management platform (e.g., Non-RT RIC or SMO);
sensing data (e.g., from ISAC); and
RF coverage data (e.g., from RF coverage models).

The network usage conditions may correspond to a point in time within a repeating schedule. Implementing the modified set of instructions may comprise implementing the modified set of instructions according to a timetable, so that the modified set of instructions is implemented at a time corresponding to the point in time within the repeating schedule.

In other words, the network conditions at the time the schedule is implemented may align with the network conditions used for training the model (i.e., the model against which the modified set of instructions is simulated).

The needs of the network may vary in accordance with a repeating pattern. For example, in a shopping mall the mornings may be quieter and less capacity may be needed. At lunchtime, the capacity in a food court may be increased. When schools finish, children's areas may busier and capacity may be increased there. The schedule may be adapted based on workdays/weekends, public holidays, school holidays, and the like.

Network usage conditions may be used to train the model to the need of the network. The model may be used to simulate the modified instructions to refine the instructions (e.g., to provide the best output for efficiency, throughput etc., based on performance metrics). The modified instructions may be provided to the dynamic L1 scheduler based on the trained sequences.

The method may further comprise receiving real-time network usage data. Implementing the modified set of instructions may comprise selecting the modified set of instructions based on the real-time network usage data.

The method may further comprise dynamically adjusting the set of instructions based on the network usage data.

The set of instructions may comprise a plurality of parameters including one or more of: subcarrier spacing; and symbol duration.

The method may further comprise storing the updated set of instructions in a persistent storage location of the scheduler.

The persistent storage location may be a file stored on the scheduler at a fixed file location (a "fixed location file").

The RAN may be an Open RAN.

The Open RAN may comprise one or more network function deployments.

The one or more network function deployments may comprise an Open Distributed Unit, O-DU.

The O-DU may comprise the scheduler.

The Open RAN may comprise a controller configured to perform the step of modifying the set of instructions.

The controller may be a Non-Real-Time RAN Intelligent Controller, Non-RT RIC.

The one or more base stations may be associated with a single cell and the plurality of UEs may be connected to the single cell.

The one or more base stations may be associated with a plurality of different cells and the plurality of UEs may each be connected to a cell selected from the plurality of different cells.

A controller configured to perform any of the methods described above is also provided.

A computer program comprising instructions that, when executed on a processor, cause the processor to perform any of the methods described above is also provided.

### Brief description of the drawings

Fig. 1 illustrates an example cloud platform.
The present invention is described with reference to the following figures, which illustrate non-limiting examples.
Fig. 2 illustrates a schematic of a system according to a specific example.
Fig. 3 illustrates a timing diagram according to a specific example.
Fig. 4 illustrates a schematic of a system according to another specific example.
Fig. 5 illustrates a schematic of a system according to another specific example.
Fig. 6 illustrates a schematic of a system according to another specific example.
Fig. 7 illustrates a schematic showing data flow in a system according to a specific example.

### Detailed description

The proposed methods are described below with reference to an Open RAN system. The proposed methods are particularly suitable for an Open RAN system because Open RAN provide mechanisms for feeding environmental data and network usage back to the RAN for modifying the schedule. Nevertheless, the proposed methods could be implemented in Non-Open RAN networks, providing the network usage data and/or network usage conditions are made available to the network.

Prior to Open RAN, mobile networks were built by a small number of vendors with tightly coupled hardware and software. Interoperability between equipment from different vendors was restricted and this arrangement resulted in limited flexibility and innovation. It is an aim of Open RAN to improve the traditional model by decoupling hardware and software components. This enables greater flexibility, innovation, and cost-effectiveness in building and operating mobile networks.

As described above, the Open RAN system decouples hardware and software in the RAN network and allows hardware and software components to be provisioned separately. In order to do so, new standards for interactions between the hardware and software components of the Open RAN system have been provided by the Open RAN Alliance (the term "O-RAN" generally refers to standards specified by the Open RAN Alliance).

By moving from a Non-Open RAN to an Open RAN, the following benefits may be achieved:
Disaggregation;
Decoupling HW from SW;
Open Ecosystem;
Open Interfaces; and
Intelligent Management.

Open RAN enables interoperability for hardware and software elements provided by different suppliers. By doing so, Open RAN also provides resilience for the MNO by promoting supplier diversity in the network. If elements from a specific supplier cease to function correctly or need to be removed permanently or temporarily (e.g., due to security or performance requirements), elements from another supplier may be relied upon instead, without major disruption to the network.

Open RAN also offers potential energy efficiency improvement, for example through flexible provisioning of hardware to meet network requirements.

Open RAN enables Functional Block Separation where the baseband processing functions are separated into distinct blocks, allowing various vendors to contribute and innovate. To achieve interoperability solutions from different vendors should work together. It is therefore a goal of Open RAN to facilitate interoperability between hardware and software components across different vendors. The disaggregation of RAN functions into software-based components that can be hosted on different processor architectures introduces interoperability challenges while managing and orchestrating these functions.

The cloud platform, which is sometimes referred to as the "O-Cloud", serves as a fundamental component of the Open RAN system. The cloud platform comprises hardware and software components. The hardware components of the cloud platform include physical infrastructure nodes arranged in one or more node clusters. These provide the hardware resources that are needed to support the network function deployments (e.g., O-RU, O-DU and O-CU), which are implemented in software applications running on the cloud platform hardware.

The methods proposed in this disclosure provide dynamic real-time or near-real-time L1 scheduling based on environmental changes.

In a first embodiment, on-demand scheduling is facilitated to enhance performance from the HW platform during specified periods of time.

In a second embodiment, a trained Al model of the hardware and environment (referred to as a digital twin) is used to plan scheduling ahead of time to enhance performance of the HW platform.

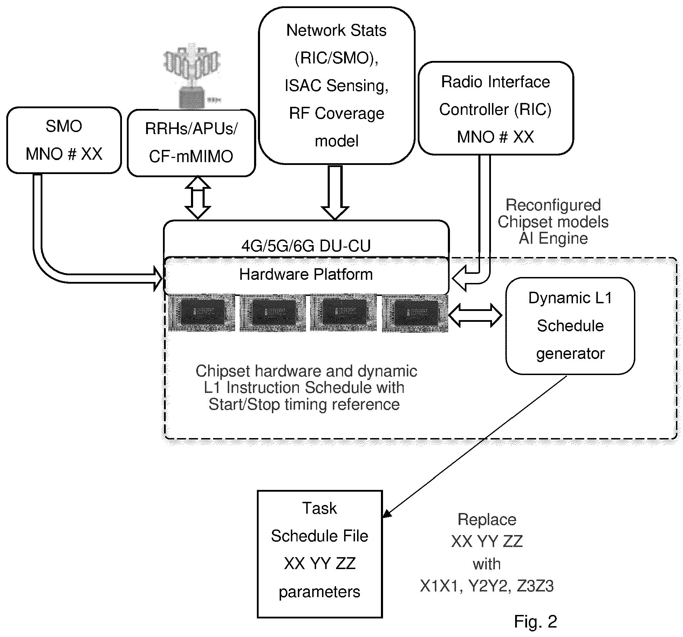

Fig. 2 illustrates a schematic of a system according to a specific example, which is in accordance with the first embodiment. The functional elements illustrated in Fig. 2. are described below.

The DU and CU (which could be 4G/5G/6G, for example) are implemented as network function applications running on the underlying hardware of the O-Cloud platform.

The SMO is responsible for allocating hardware resources to the network functions.

The DU and CU network functions are in communication with one or more Remote Radio Heads (RRHs), Antenna Processing Units (APUs) and Cell-Free massive Multiple-Input Multiple-Output (CF-mMIMO) for communicating data with UEs connected via the radio access network.

Network usage data is provided in the form of one or more of: Network Stats (e.g., from the RIC and/or SMO); ISAC Sensing data; and RF Coverage data from an RF coverage model.

The Radio Interface Controller (also referred to as a "RAN Intelligent Controller"; RIC) is in communication with the hardware platform for controlling and tuning RAN functions. The RIC may be a Near-RT RIC and may reside within a telco edge cloud or regional cloud.

The dynamic L1 Schedule generator (which may be a component of the RIC), is in communication with the hardware platform and comprises a task schedule file for implementing a modified schedule. The modified schedule may allocate more radio resources to one or more of the UEs connected via the RAN, based on the network usage data. The modified schedule may be implemented for a limited period of time before reverting to the previous schedule.

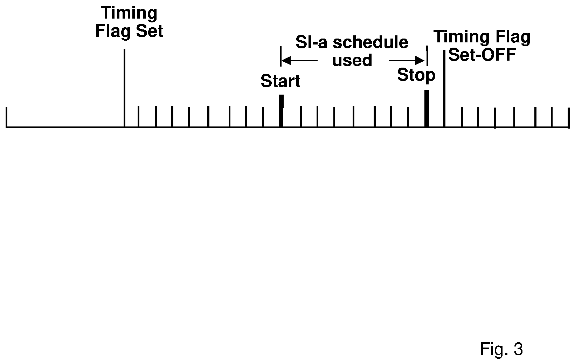

Fig. 3 illustrates a timing diagram according to a specific example, which is in accordance with the first embodiment. The timing method comprises the following steps:
Step 1: Timing Flag set for a next specified number of frame-slots or a specified time period with Start and Stop times.
Step 2: Modified set of Scheduler Instructions (SI-a) sent to L1 Scheduler file.
Step 3: L1 Task scheduler uses the new set of Scheduler Instructions (SI-a) for the specified number of frame-slots or specified time period.
Step 4: Timing Flag set off.
Step 5: Revert to Default set of L1 Task Scheduler Instructions or set a new Timing Flag for a new set of Scheduler Instructions (SI-b)

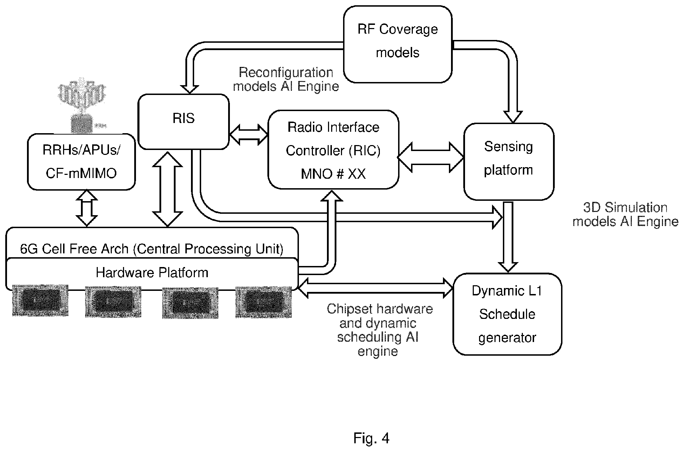

Fig. 4 illustrates a schematic of a system according to another specific example, which is in accordance with the first embodiment.

The 6G cell-free architecture may comprise DU and CU network functions running on the underlying hardware of the O-Cloud platform.

The 6G cell-free architecture is in communication with one or more Remote Radio Heads (RRHs), Antenna Processing Units (APUs) and Cell-Free massive Multiple-Input Multiple-Output (CF-mMIMO) for communicating data with UEs connected via the radio access network.

The Radio Interface Controller (also referred to as a "RAN Intelligent Controller"; RIC) is in communication with the hardware platform for controlling and tuning RAN functions. The RIC may be a Near-RT RIC and may reside within a telco edge cloud or regional cloud.

Network usage data is provided to the RIC from a sensing platform (e.g., an ISAC platform).

The RIC may be used to control one or more Reconfigurable Intelligent Surfaces (RISes). The one or more RISes may also be configured to provide network usage data to the RIC.

RF Coverage data from an RF coverage model is provided to the RIS and Sensing platform. The RIS and Sensing platform may also feed data back to the RF coverage model to refine the model.

The dynamic L1 Schedule generator (which may be a component of the RIC), is in communication with the hardware platform and comprises a task schedule file for implementing a modified set of scheduler instructions (which may also be referred to as a "schedule" or "schedule of instructions"). The dynamic L1 Schedule generator is also in communication with the RIS and sensing platform for receiving network usage data. The modified schedule may allocate more radio resources to one or more of the UEs connected via the RAN, based on the network usage data. The modified schedule may be implemented for a limited period of time before reverting to the previous schedule. The modified set of instructions may be implemented via a chipset hardware of the L1 scheduler (and may make use of a dynamic scheduling Al engine).

Changes in the environment such as number of subscribers, traffic density, direction of user mobility, interference, signal strength may be recorded on a real-time or near-real-time basis.

The recorded inputs may be fed to the Dynamic L1 Schedule generator. Performance parameters needed by the subscribers in the area for the specified period of time may be used to create a new L1 schedule for an on-demand service. The new L1 schedule parameters may be updated on a near-real-time basis in the fixed location file of the current scheduler.

The updated set of scheduler instructions may be flagged as ready to be executed within a predetermined window (e.g., from a specified time to a specified time). The optimised set of L1 scheduler instructions may be created for specified periods of time, based on the environment demand (as interpreted based on the network usage data).

The feedback from the environment and the performance KPIs of the HW platform may be collected and correlated. Rapid changes may be constantly fed into the Dynamic L1 Schedule Generator.

Additionally, the network operator can request (e.g., via RIC apps) a new set of scheduler instructions for a new subscriber application for another specified period of time

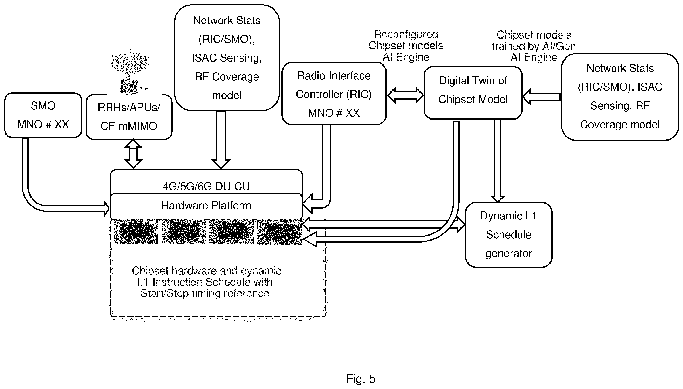

Fig. 5 illustrates a schematic of a system according to another specific example, which is in accordance with the second embodiment.

The DU and CU (which could be 4G/5G/6G, for example) are implemented as network function applications running on the underlying hardware of the O-Cloud platform.

The SMO is responsible for allocating hardware resources to the network functions.

The DU and CU network functions are in communication with one or more Remote Radio Heads (RRHs), Antenna Processing Units (APUs) and Cell-Free massive Multiple-Input Multiple-Output (CF-mMIMO) for communicating data with UEs connected via the radio access network.

Network usage conditions are provided in the form of one or more of: Network Stats (e.g., from the RIC and/or SMO); ISAC Sensing data; and RF Coverage data from an RF coverage model.

The Radio Interface Controller (also referred to as a "RAN Intelligent Controller"; RIC) is in communication with the hardware platform for controlling and tuning RAN functions. The RIC may be a Near-RT RIC and may reside within a telco edge cloud or regional cloud.

A digital twin is used to simulate the set of L1 scheduler instructions using a model of one or more physical hardware elements on which the scheduler is implemented. The network usage conditions (Network Stats (e.g., from the RIC and/or SMO); ISAC Sensing data; and RF Coverage data from an RF coverage model) are provided to the digital twin to obtain one or more predicted performance metrics.

The predicted performance metrics may be provided to the RIC. The predicted performance metrics may be used to modify the set of instructions to generate an improved set of instructions.

The dynamic L1 Schedule generator (which may be a component of the RIC and/or the SMO), is in communication with the hardware platform and comprises a task schedule file for implementing one or more modified sets of scheduler instructions. Each modified set of scheduler instructions may allocate more radio resources to one or more of the UEs connected via the RAN, based on the outcome of the simulation and/or the network usage conditions.

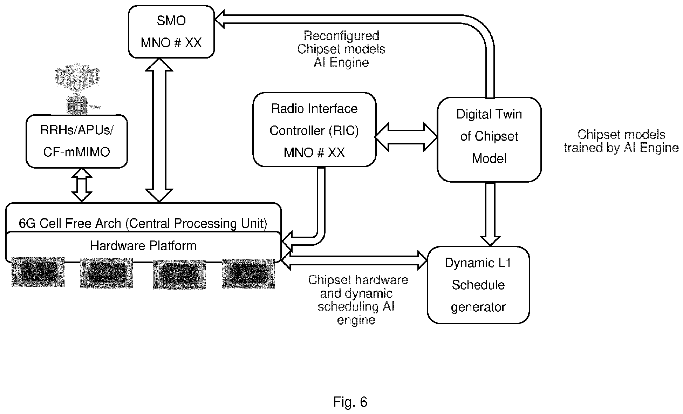

Fig. 6 illustrates a schematic of a system according to another specific example, which is in accordance with the second embodiment.

A digital model of the hardware (e.g., chipset) is created in the Digital Twin.

The Non-Real-Time RIC and SMO provide data to the Digital Twin, such as network usage conditions and hardware details.

Performance parameters needed by the subscribers in the area for the specified period of time is used to create a new set of L1 scheduler instructions for an on-demand service that is trained by Al in the Digital Twin. The optimised L1 schedule is created for specified periods of time, as per the environment demand.

The new L1 schedule parameters are sent to the fixed location file of the current scheduler. The updated schedule is flagged ready to be executed from a specified time to a specified time.

The feedback from the environment and the performance KPIs of the HW platform may be collected and correlated. Changes may be continually fed back into the Dynamic L1 Schedule Generator to improve the one or more sets of scheduler instructions. These improvements may be simulated using the digital twin and implemented in the future (i.e., on a non-real-time basis).

The mobile network operator can request (e.g., via RIC apps) a new set of scheduler instructions for a new subscriber application for another specified period of time

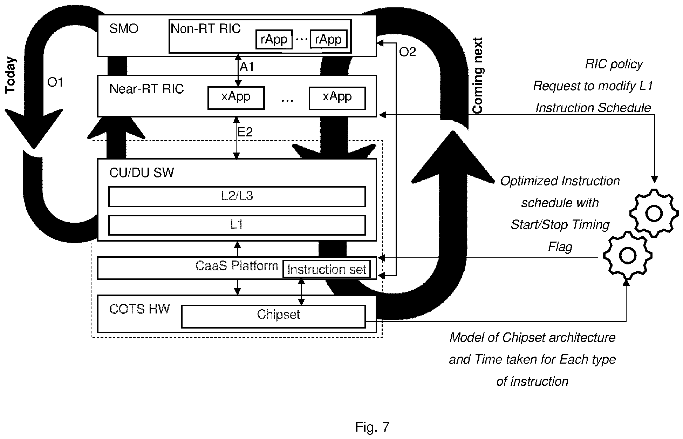

Fig. 7 illustrates a schematic showing data flow in a system according to a specific example, which is in accordance with the first embodiment and the second embodiment.

In the first embodiment, network usage data is provided to the Near-RT RIC for dynamically modifying the set of instructions. The network usage data is provided in the form of one or more of: Network Stats (e.g., from the RIC and/or SMO); ISAC Sensing data; and RF Coverage data from an RF coverage model.

The network usage data may comprise airport flight schedule take-off and landing data.

The modified set of L1 Scheduler Instructions may be provided to the scheduler, which may be part of the CaaS (containers as a service) platform. The Start/Stop Timing Flag may also be provided to the scheduler.

An example method according to the first embodiment may comprise the steps described below.

Step 1: Receiving network usage data, such as sensing data, RF changes or operator or enterprise customer database (e.g., airport flight schedule take-off/landing data). The network usage data is received by the Near-RT RIC. The network usage data may comprise a request for or indicate a need for a temporary increase in capacity. For example, there may be a need for high compute for the next 12 mins at arrival immigration/customs due to a flight arriving. In another example, the duration of the need for high compute may be only a few seconds (e.g. gaming, video capture by drone) or milliseconds (e.g., as requested by a robot in industry or health instrument in ambulance/home).

Step 2: Based on the network usage data (which may also comprise data from network elements including the RIC and/or SMO, as well as sensing data from ISAC and RF Coverage models), a modified set of L1 Scheduler Instructions is determined for the specified request.

Step 3: The timing Flag is set with a designated Start/Stop time (with instantaneous response request).

Step 4: Feedback from implementing the modified schedule is received for further RIC policy adaptation. Closed-loop control of chipset performance is implemented by RIC/SMO/ISAC/RF Model.

In the second embodiment, network usage data is provided to a model of one or more physical hardware elements on which the scheduler is implemented (a digital twin) for simulating one or more sets of instructions. The network usage data is provided in the form of one or more of: Network Stats (e.g., from the RIC and/or SMO); ISAC Sensing data; and RF Coverage data from an RF coverage model.

One or more modified sets of instructions (e.g., different instructions for different periods of time) may be generated based on the simulation.

The modified set of L1 Scheduler Instructions may be provided to the scheduler, which may be part of the CaaS (containers as a service) platform. A Start/Stop Timing Flag may also be provided to the scheduler for each modified set of instructions.

An example method according to the second embodiment may comprise the steps described below.

Step 1: A model of the chipset architecture is replicated in the Digital Twin, especially the time taken for each type of basic instruction/execution.

Step 2: The Digital Twin is trained by Al/Gen Al with data from the Network (e.g., from the RIC and/or SMO), Sensing (ISAC), RF Coverage models (collectively referred to as network usage conditions). A modified set of L1 Scheduler Instructions is determined for the specified subscriber area (malls, industry, highways, city center).

Step 3: The timing Flag is determined by the Digital Twin or a request from a RIC policy (e.g. morning/evening rush hour, weekends, bank holidays etc.) This Start/Stop time using a Digital Twin may relate to longer time frames and not instantaneous response time (in contrast to the first embodiment).

Step 4: Feedback from implementing the modified schedule is sent to the hardware model and also used for further RIC policy adaptation. Closed-loop control of chipset performance is therefore implemented by RIC/SMO/ISAC/RF Model.

Step 5: The hardware model (Digital Twin) is used for modifying the set of instructions and is refined based on further network usage data collected during implementation of the modified set of instructions. Different sets of modified instructions may be created and implemented according to a repeating schedule to account for macro network changes and better serve UEs connected via the access network.

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy.

Where this application refers to a "network entity", the skilled person would understand that the network entity may actually be provided by a plurality of servers that are geographically distributed.

An Open Radio Access Network as described above may be used to provide a cellular network serving one or more User Equipments, UEs. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above examples are described in relation to specific radio access networks (e.g., 4G and 5G radio access networks), these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems. Moreover, the technical features of the present invention may be applied to future iterations of multiple access systems defined in 3GPP standards, such as (but not limited to) 6G.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a cellular network may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a network entity, a server or a cell) means "one or more" (for instance one or more UEs, one or more network entities, one or more servers, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of data transmission in a radio access network, wherein the radio access network comprises a scheduler configured to orchestrate communication of data between one or more base stations and a plurality of User Equipments, UEs, according to a set of instructions, the method comprising:
receiving real-time network usage data;
dynamically modifying the set of instructions based on the network usage data; and
implementing the modified set of instructions so that the scheduler is configured to orchestrate communication of data between the one or more base stations and the plurality of UEs according to the modified set of instructions, wherein the set of instructions comprises one or more parameters related to constraints on target hardware.

2. The method of claim 1, wherein modifying the set of instructions comprises defining a period of time during which the modified set of instructions is implemented by the scheduler.

3. The method of claim 1 or claim 2, wherein the set of instructions comprises a plurality of parameters including one or more of:
subcarrier offset;
subcarrier spacing;
symbol duration;
slot format;
a time domain allocation for downlink data transmission, k0;
Ack/Nack timing information, k1;
a time domain allocation for uplink data transmission, k2;
a Start and Length Indicator Value, SLIV;
a minimum time duration required from decoding a Physical Downlink Control Channel, PDCCH, to reception of a Physical Data Shared Channel, PDSCH, N1;
a minimum time duration required from decoding a Physical Downlink Control Channel, PDCCH, to transmission of a Physical Uplink Shared Channel, PUSCH, N2;
a wait time;
a response time;
a turnaround time;
a buffer size;
a chunking size;
a 5G Quality of Service, QoS, Identifier;
an Allocation and Retention Priority, ARP;
a Reflective QoS Attribute, RQA;
one or more scheduling weights;
one or more admission thresholds; and
one or more queue management thresholds.

4. The method of any preceding claim, wherein the RAN is an Open RAN comprising:
one or more network function deployments comprising an Open Distributed Unit, O-DU, wherein the O-DU comprises the scheduler; and
a controller configured to perform the steps of receiving the real-time network usage data and dynamically modifying the set of instructions based on the network usage data.

5. The method of claim 4, wherein the controller is a Near Realtime RAN Intelligent Controller, Near-RT RIC.

6. The method of any preceding claim, wherein the network usage data is indicative of changes in the environment including one or more of:
a number of subscribers,
a traffic density,
a direction of subscriber mobility,
a maximum subscriber mobility,
a minimum subscriber mobility,
a speed of congregation,
a measurement of interference,
a signal strength,
a downlink latency
an uplink latency, and
a power saving mode.

7. The method of any preceding claim, wherein the network usage data comprises data from an Integrated Sensing and Communication, ISAC, platform.

8. The method of any preceding claim, wherein the network usage data is indicative of changes in radio frequency, RF, coverage, wherein the method further comprises adjusting one or more Reconfigurable Intelligent Surfaces, RISes, to improve coverage, based on the network usage data.

9. The method of claim 8, wherein adjusting the one or more RISes is further based on one or more RF coverage models.

10. The method of any preceding claim, wherein the network usage data comprises schedule data indicative of planned or forecasted changes in demand for data capacity.

11. The method of any preceding claim, wherein the network usage data comprises a request for temporary increased data capacity.

12. The method of any preceding claim, wherein either:
the one or more base stations are associated with a single cell and the plurality of UEs are connected to the single cell; or
the one or more base stations are associated with a plurality of different cells and the plurality of UEs are each connected to a cell selected from the plurality of different cells.

13. The method of any preceding claim, wherein dynamically modifying the set of instructions based on the network usage data comprises modifying the set of instructions based on a model of one or more physical hardware elements on which the scheduler is implemented.

14. A controller configured to perform the method of any of claims 1 to 13.

15. A computer program comprising instructions that, when executed on a processor, cause the processor to perform the method of any of claims 1 to 13.
